# EUROPÄISCHE PATENTSCHRIFT

(11) **EP 3 089 271 B1**
(45) Veröffentlichungstag und Bekanntmachung des Hinweises auf die Patenterteilung: **11.03.2020**
(21) Anmeldenummer: 15305657.7
(22) Anmeldetag: 29.04.2015
(51) Int. Cl.: H01R 4/30, H01R 11/12, H01R 43/20

(54) **VERFAHREN UND ANORDNUNG ZUM MONTIEREN EINES KABELSCHUHS**
PROCESS AND ARRANGEMENT FOR MOUNTING A CABLE LUG
PROCÉDÉ ET ARRANGEMENT POUR MONTER UNE COSSE DE CÂBLE

(43) Veröffentlichungstag der Anmeldung: 02.11.2016
(73) Patentinhaber: Nexans, 92400 Courbevoie (FR)
(72) Erfinder: Bock, Norbert, 95505 Immenreuth (DE); Damian, Joan, 74257 Untereisesheim (DE); Wall, Markus, 92685 Floß (DE)
(74) Vertreter: Feray, Valérie

(56) Entgegenhaltungen:
- FR-A1- 2 842 656
- JP-U- H0 463 567

## Beschreibung

Die Erfindung bezieht sich auf ein Verfahren zum Montieren eines Kabelschuhs an einem fest in einem Kraftfahrzeug angebrachten Bauteil gemäß Patentanspruch 1 sowie auf ein entsprechend ausgerüstetes Kraftfahrzeug gemäß Patentanspruch 2.

In einem Kraftfahrzeug stellt die Karosserie die elektrische Masse dar. Kabel von einer Vielzahl von elektrischen Stromkreisen, die zur Versorgung von elektrischen oder elektronischen Komponenten im Kraftfahrzeug dienen, müssen an die Masse angeschlossen werden. Dazu sind an der Karosserie an verschiedenen Stellen Metallbolzen oder -stift elektrisch leitend angebracht, mit welchen ein oder mehrere Kabel gleichzeitig elektrisch verbunden werden können. Die zu verbindenden Kabel sind dazu mit Kabelschuhen oder anderen elektrischen Anschlußelementen ausgerüstet, welche an den Metallbolzen oder -stiften montiert werden können.

Eine bekannte Halteanordnung für Kabelschuhe geht beispielsweise aus der US 2011/0053434 A1 hervor. Die Halteanordnung hat einen Grundteil und einen Deckelteil, welche den Anschlußbereich des Kabelschuhs zwischen sich aufnehmen und radial festlegen. Eine zentrale Öffnung an dem Grundteil und dem Deckelteil erlaubt die elektrische Kontaktierung des Kabelschuhs. Die Halteanordnung wird dann auf einen Massebolzen aufgesetzt, sodass der Kabelschuh elektrisch mit der Masse verbunden ist. Die Halteanordnung wird abschließend mittels einer Mutter auf dem Massebolzen festgeschraubt.

Die FR 2 842 656 A1 beschreibt eine Anordnung, insbesondere eine Fahrzeugheizung, bei welcher jeweils mit einem Kabelschuh bestückte elektrische Leiter an rohrförmigen Zapfen festgelegt sind. Die Kabelschuhe sind direkt auf die Zapfen aufgesteckt. Sie haben einen umlaufenden Kragen, auf dem in Montageposition Klipps aufliegen, durch welche die Kabelschuhe gehalten und in ihrer Position fixiert sind. In einer anderen Ausführungsform ist die Position der Kabelschuhe auf den Zapfen durch eine mit Vorsprüngen und Rasthaken ausgerüstete Abdeckung fixiert, die einerseits auf den Kragen der Kabelschuhe aufliegen und andererseits unter dieselben greifen.

Der Erfindung liegt die Aufgabe zugrunde, ein verbessertes Verfahren zur Montage eines Kabelschuhs an einem fest in einem Kraftfahrzeug angebrachten Bauteil sowie ein entsprechend verbessertes Kraftfahrzeug anzugeben.

Diese Aufgabe wird entsprechend der Gesamtheit der Merkmale des Patentanspruchs 1 bzw. des Patentanspruchs 2 gelöst.

Mit dem erfindungsgemäßen Verfahren ist es mit Vorteil möglich, die Festlegung des Bauteils im Kraftfahrzeug und die elektrische Verbindung der elektrischen Leitungen und der damit verbundenen elektrischen Geräte in ein und demselben Arbeitsschritt auszuführen. Das Verfahren ist daher besonders effizient und kostengünstig. Die entsprechende Anordnung besitzt eine kompakte Bauform, da keine separaten Anschlüsse für die elektrischen Leitungen bereitgestellt werden müssen.

Das Bauteil wird mit der an diesem festgelegten Einheit aus Aufnahmeelement und Kabelschuh so an einem festen Massepunkt in dem Kraftfahrzeug festgelegt, dass der Kabelschuh im Montagezustand elektrisch leitend mit dem Massepunkt verbunden ist. Mit der Montage des Bauteils und der Vorpositionierung der Kabelschuhe daran ist demnach sichergestellt, dass alle vorgesehenen Masseleitungen an vorbestimmten Positionen an die Masse angeschlossen sind, ohne dass ein zusätzlicher Arbeitsschritt notwendig ist. Ein Ausführungsbeispiel des Erfindungsgegenstandes ist in den Zeichnungen dargestellt.

Es zeigen:
Fig. 1 ein Ausführungsbeispiel einer bei dem Verfahren nach der Erfindung eingesetzten Anordnung in unmontiertem Zustand.
Fig. 2 die Anordnung nach Fig. 1 in teilweise montiertem Zustand.
Fig. 3 die Anordnung nach Fig. 1 in an einem Massepunkt montiertem Zustand.
Fig. 4 eine im Motorraum eines Kraftfahrzeugs montierte Anordnung.

In den Zeichnungen beziehen sich gleiche Bezugszeichen auf gleiche technische Merkmale.

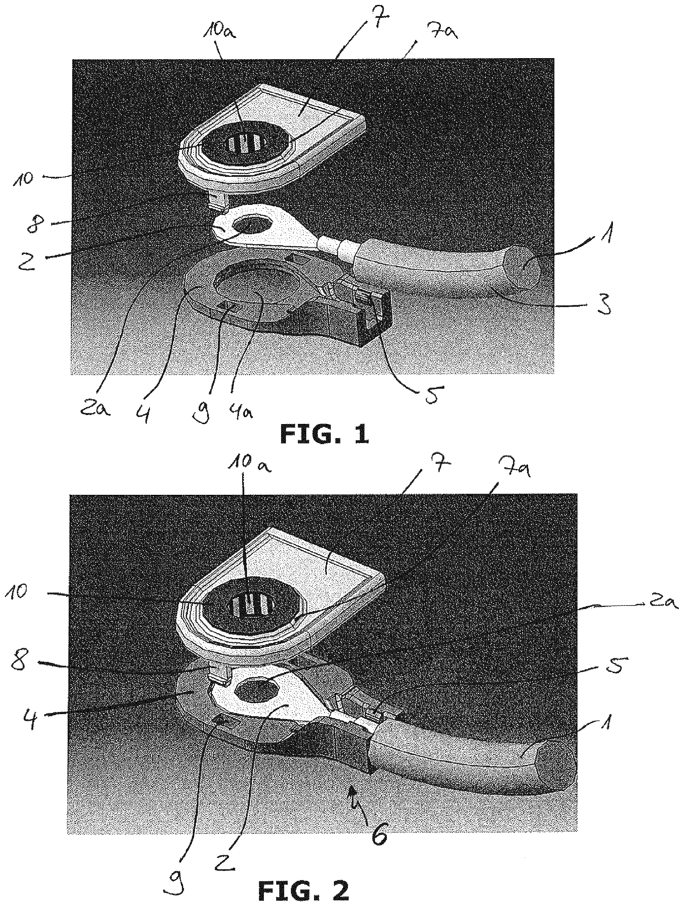

Ein Ausführungsbeispiel einer mit dem Verfahren nach der Erfindung hergestellten Anordnung ist in Fig. 1 dargestellt:
Am Ende einer elektrischen Leitung 1 ist ein Kabelschuh 2 elektrisch leitend angeschlossen. Die elektrische Leitung 1 ist mit einer Isolierung 3 gezeigt. Der an die elektrische Leitung 1 angeschlossene Kabelschuh 2 wird in ein Aufnahmeelement 4 eingelegt. Dies ist in Fig. 2 dargestellt. Das Aufnahmeelement 4 besteht aus Isoliermaterial. In dem dargestellten Beispiel wird der Kabelschuh 2 mittels einer Klemmvorrichtung 5 in dem Aufnahmeelement 4 befestigt. Er bildet mit diesem eine Einheit 6.

Diese Einheit 6 wird an einem Befestigungselement 7 befestigt. Das Befestigungselement 7 ist dauerhaft an einem Bauteil, welches fest in dem Kraftfahrzeug montiert ist, angebracht. Das Aufnahmeelement 4 und das Befestigungselement 7 werden mittels eines Rastmechanismusses 8, 9 miteinander verbunden, wie in den Fig. 1 und 2 dargestellt.

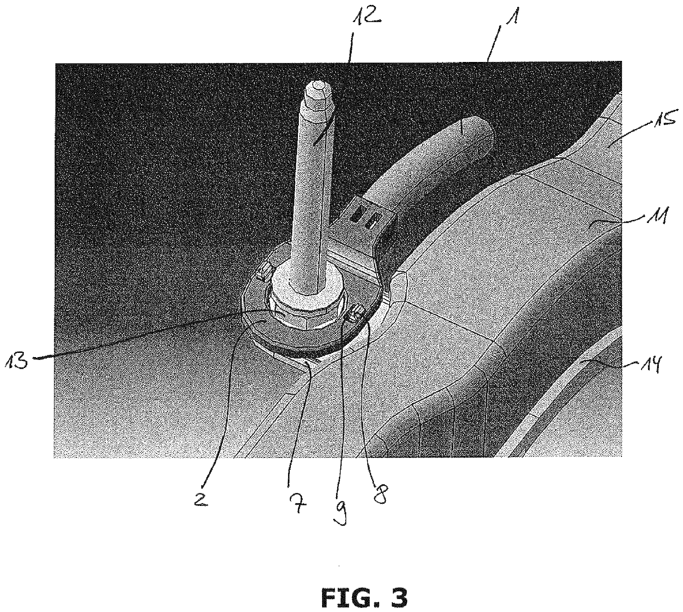

Der Kabelschuh 2, das Aufnahmeelement 4 und das Befestigungselement 7 haben jeweils eine zentrale Öffnung 2a, 4a, 7a. Dadurch können diese drei Elemente an einem stabförmigen Massepunkt in dem Kraftfahrzeug befestigt werden, indem sie gemeinsam, in verbundenem Zustand, auf diesen aufgesteckt und an diesem verschraubt oder anderweitig festgelegt werden. Der Massepunkt ist beispielsweise ein Metallbolzen oder -stab, welcher fest und elektrisch leitend mit der Fahrzeugkarosserie verbunden ist. Dadurch ist der Kabelschuh 2 elektrisch leitend mit dem Massepunkt und so mit der Karosserie verbunden. Fig. 3 illustriert einen solchen Metallbolzen 12, auf welchen das Befestigungselement 7 mit der an diesem festgelegten Einheit 6 aus Aufnahmeelement 4 und Kabelschuh 2 aufgesteckt ist.

Das Aufnahmeelement 4 hat einen zentralen metallischen Einsatz 10 (s. Fig. 1 und 2). Der metallische Einsatz 10 hat ein zentrale Bohrung 10a, durch welche das Aufnahmeelement 4 auf den stabförmigen Massepunkt 12 aufgeschoben werden kann. Im Montagezustand liegt der abgeflachte Teil des Kabelschuhs 2 auf dem metallischen Einsatz 10 auf.

Das Befestigungselement 7 mit der daran angebrachten Einheit 6 aus Kabelschuh 2 und Aufnahmeelement 4 wird im dargestellten Beispiel mittels einer Mutter 13 an dem Metallbolzen 12 festgeschraubt. Dabei liegt die Mutter 13 auf dem abgeflachten Teil des Kabelschuhs 2 auf. Durch den metallischen Einsatz 10 und die metallische Mutter 13, welche jeweils an dem Kabelschuh 2 im Montagezustand anliegen, wird die Kontaktfläche des Kabelschuhs 2 mit dem Metallbolzen 12 und damit der Masse erheblich vergrößert und so ein guter elektrischer Kontakt sichergestellt.

In dem Beispiel nach Fig. 3 ist das feste Bauteil im Fahrzeug ein Kabelkanal 11. Das Gehäuse des Kabelkanals 11 besteht aus einem Unterteil 14, an welchem das Befestigungselement 7 fest angebracht ist, und einem Deckel 15. Die Befestigung des Kabelkanals an der Fahrzeugkarosserie und der Anschluß des Kabelschuhs 2 oder der Kabelschuhe an die Masse erfolgen in einem und demselben Arbeitsschritt, indem der Kabelkanal 11 mitsamt der jeweils an dem Befestigungselement 7 angebrachten Einheit 6 aus Kabelschuh 2 und Aufnahmeelement 4 an dem Metallstab 12 festgeschraubt wird.

Das Verfahren zum Montieren eines Kabelschuhs 2 an einem fest in einem Kraftfahrzeug angebrachten Bauteil 11 kann folgendermaßen ausgeführt werden:
Zunächst wird der Kabelschuh 2 elektrisch leitend am Ende einer elektrischen Leitung 1 angeschlossen. Anschließend wird der angeschlossene Kabelschuh 2 in das Aufnahmeelement 4 eingelegt und mit diesem verbunden. Der Kabelschuh 2 wird in dem Aufnahmeelement 4 festgeklemmt, wie in den Fig. 1 und 2 dargestellt. Abschließend wird die Einheit 6 aus Aufnahmeelement 4 und Kabelschuh 2 an dem Befestigungselement 7 befestigt.

Das Bauteil 11 kann nun, wie oben bereits ausgeführt, an einem oder mehreren Massepunkten 12 in der Fahrzeugkarosserie angebracht werden, wobei gleichzeitig der Kabelschuh 2 oder die Kabelschuhe elektrisch leitend mit der Masse verbunden werden.

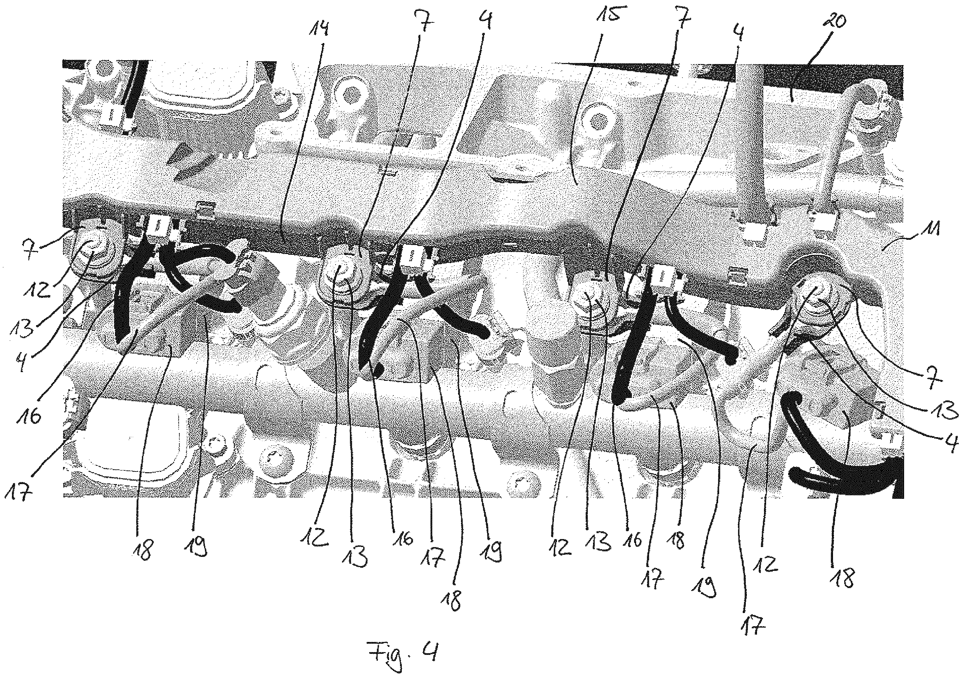

In Fig. 4 ist ein Kraftfahrzeug mit einer im Motorraum des Kraftfahrzeugs montierten Anordnung dargestellt:
Bei dem fest im Kraftfahrzeug angebrachten Bauteil 11 handelt es sich um einen Kabelkanal, welcher aus einem Unterteil 14 und einem Deckel 15 besteht. An dem Unterteil 14 sind die Befestigungselemente 7 angebracht. Im gezeigten Beispiel sind sie in einem Arbeitsschritt mit dem Unterteil 14 in einem Spritzgießverfahren hergestellt worden. In dem Kabelkanal verlaufen elf verschiedene Leitungen, die beispielsweise zur Versorgung elektrischer und elektronischer Komponenten im Kraftfahrzeug oder zur Signalübertragung notwendig sind. An verschiedenen Stellen des Kabelkanals ragen elektrische Versorgungskabel 16 für Zündspulen 19 aus demselben heraus. Die Versorgungskabel 16 sind an Stecker 18 angeschlossen, welche mit den Zündspulen 19 verbunden sind. Von den Steckern 18 gehen jeweils Masseleitungen 17 aus, deren Enden mit Kabelschuhen (s. Fig. 1-3) versehen sind. Die Kabelschuhe sind jeweils mittels Aufnahmeelementen 4 an den Befestigungselementen 7 des Kabelkanals angebracht. Der Kabelkanal mit den daran befestigten Masseleitungen 17 ist an den Massepunkten 12 mittels Muttern 13 festgeschraubt. Die Massepunkte 12 sind in dem dargestellten Beispiel an einer Zylinderkopfhaube 20 angebracht. Die Massepunkte 12 sind elektrisch leitend mit der Fahrzeugkarosserie verbunden. Die Anordnung eignet sich insbesondere für den Masseanschluß von Zündspulen, da deren Masseleitungen 17 eine bestimmte Länge, beispielsweise 150 mm, nicht überschreiten dürfen.

## Patentansprüche

1. Verfahren zum Montieren eines Kabelschuhs (2) an einem fest in einem Kraftfahrzeug angebrachten Bauteil (11), wobei
- der Kabelschuh (2) elektrisch leitend am Ende einer elektrischen Leitung (1) angeschlossen wird,
- der angeschlossene Kabelschuh (2) in ein aus Isoliermaterial bestehendes Aufnahmeelement (4) eingelegt und in diesem festgeklemmt wird,
- die Einheit (6) aus Aufnahmeelement (4) und Kabelschuh (2) an einem ebenfalls aus Isoliermaterial bestehenden Befestigungselement (7), welches fest an dem Bauteil (11) angebracht ist, festgelegt wird, wobei das Aufnahmeelement (4) und das Befestigungselement (7) durch einen Rastmechanimus (8,9) miteinander verbunden werden, wobei der Kabelschuh (2), das Aufnahmeelement (4) und das Befestigungselement (7) jeweils eine zentrale Bohrung (2a, 4a, 7a, 10a) aufweisen, durch welche das Bauteil (11) mit dem Aufnahmeelement (4) und dem Kabelschuh (2) auf einen stabförmigen Massepunkt (12) in dem Kraftfahrzeug aufsetzbar ist, und wobei das Aufnahmeelement (4) einen metallischen Einsatz (10) aufweist, in welchem sich die zentrale Bohrung (10a) befindet, und
- das Bauteil (11) mit der an diesem festgelegten Einheit (6) aus Aufnahmeelement (4) und Kabelschuh (2) so an einem festen stabförmigen Massepunkt (12) in dem Kraftfahrzeug festgelegt wird, dass der Kabelschuh (2) im Montagezustand elektrischen leitend mit dem Massepunkt (12) verbunden ist.

2. Kraftfahrzeug mit einem fest in dem Kraftfahrzeug angebrachten Bauteil (11) und mit einer Anordnung zur Montage mindestens eines Kabelschuhs (2) an dem Bauteil (11) mit dem Verfahren nach Anspruch 1, die Anordnung umfassend das Bauteil (11), den mindestens einen Kabelschuh (2), sowie für jeden Kabelschuh (2) eine elektrische Leitung (1) und ein aus Isoliermaterial bestehendes Aufnahmeelement (4), wobei der Kabelschuh (2) elektrisch leitend am Ende der elektrischen Leitung (1) angeschlossen ist und in das Aufnahmeelement (4) eingelegt und in diesem festgeklemmt ist,
wobei das Bauteil (11) für jeden Kabelschuh (2) jeweils ein aus Isoliermaterial bestehendes Befestigungselement (7) aufweist, an welchem der jeweilige Kabelschuh (2) mittels des Aufnahmeelements (4) festgelegt ist, welches mit dem Befestigungselement (7) durch einen Rastmechanismus (8,9) verbunden ist,
wobei der Kabelschuh (2), das Aufnahmeelement (4) und das Befestigungselement (7) jeweils eine zentrale Bohrung (2a, 4a, 7a, 10a) aufweisen, durch welche die Anordnung für jeden Kabelschuh (2) auf jeweils einen stabförmigen Massepunkt (12) in dem Kraftfahrzeug aufgesetzt ist,
wobei das Aufnahmeelement (4) einen metallischen Einsatz (10) aufweist, in welchem sich die zentrale Bohrung (10a) befindet, und wobei das Bauteil (11) mit der an diesem festgelegten Einheit (6) aus Aufnahmeelement (4) und Kabelschuh (2) so an dem festen stabförmigen Massepunkt (12) in dem Kraftfahrzeug festgelegt ist, dass der Kabelschuh (2) elektrisch leitend mit dem Massepunkt (12) verbunden ist.

## Claims

1. A method for mounting a cable lug (2) on a component (11) fixedly attached in a motor vehicle, wherein
- the cable lug (2) is connected electrically conductively to the end of the electrical line (1),
- the connected cable lug (2) is inserted into a receiving element (4) consisting of insulating material and is clamped in the latter,
- the unit (6) consisting of the receiving element (4) and the cable lug (2) is fixed to a fastening element (7) also consisting of insulting material, which is fixedly attached to the component (11), wherein the receiving element (4) and the fastening element (7) are connected with one another by a latching mechanism (8, 9), wherein the cable lug (2), the receiving element (4) and the fastening element (7) in each case have a central bore (2a, 4a, 7a, 10a), through which the component (11) with the receiving element (4) and the cable lug (2) can be placed on a rod-shaped grounding point (12) in the motor vehicle, and wherein the receiving element (4) has a metallic insert (10), in which the central bore (10a) is located, and
- the component (11) with the unit (6) fixed to said component consisting of the receiving element (4) and the cable lug (2) is fixed to a fixed rod-shaped grounding point (12) in the motor vehicle, so that the cable lug (2) is connected electrically conductively to the grounding point (12) in the mounted state.

2. A motor vehicle with a component (11) fixedly attached in the motor vehicle and with an arrangement for mounting at least one cable lug (2) on the component (11) with the method according to Claim 1, the arrangement comprising the component (11), the at least one cable lug (2), and for each cable lug (2) an electrical line (1) and a receiving element (4) consisting of insulating material,
wherein the cable lug (2) is connected electrically conductively to the end of the electrical line (1) and is inserted into the receiving element (4) and is clamped in the latter,
wherein the component (11) for each cable lug (2) in each case has a fastening element (7) consisting of insulating material, to which the respective cable lug (2) is fixed by means of the receiving element (4), which is connected with the fastening element (7) by a latching mechanism (8, 9),
wherein the cable lug (2), the receiving element (4) and the fastening element (7) in each case have a central bore (2a, 4a, 7a, 10a), through which the arrangement for each cable lug (2) is placed on in each case a rod-shaped grounding point (12) in the motor vehicle, wherein the receiving element (4) has a metallic insert (10), in which the central bore (10a) is located, and
wherein the component (11) with the unit (6) fixed to said component consisting of the receiving element (4) and the cable lug (2) is fixed to the fixed rod-shaped grounding point (12) in the motor vehicle, so that the cable lug (2) is connected electrically conductively to the grounding point (12).

## Revendications

1. Procédé de montage d'une cosse de câble (2) sur un composant (11) mis en place de façon fixe dans un véhicule automobile,
- la cosse de câble (2) étant connectée de façon électriquement conductrice à l'extrémité d'une ligne électrique (1),
- la cosse de câble (2) connectée étant insérée dans un élément de réception (4) composé de matériau isolant et étant coincée dans cet élément,
- l'unité (6) composée de l'élément de réception (4) et de la cosse de câble (2) étant immobilisée sur un élément de fixation (7) également composé de matériau isolant qui est mis en place de façon fixe sur le composant (11), l'élément de réception (4) et l'élément de fixation (7) étant raccordés l'un à l'autre par un mécanisme d'encliquetage (8, 9), la cosse de câble (2), l'élément de réception (4) et l'élément de fixation (7) comportant respectivement un alésage (2a, 4a, 7a, 10a) central à travers lequel le composant (11) avec l'élément de réception (4) et la cosse de câble (2) peut être posé sur un point de masse (12) en forme de tige dans le véhicule automobile, et l'élément de réception (4) comportant un insert (10) métallique dans lequel se trouve l'alésage (10a) central, et
- le composant (11) avec l'unité (6), immobilisée sur celui-ci et composée de l'élément de réception (4) et de la cosse de câble (2), étant immobilisé sur un point de masse (12) fixe en forme de tige dans le véhicule automobile de telle sorte que, dans l'état monté, la cosse de câble (2) est raccordée de façon électriquement conductrice au point de masse (12).

2. Véhicule automobile, avec un composant (11) mis en place de façon fixe dans le véhicule automobile et avec un ensemble destiné au montage d'au moins une cosse de câble (2) sur le composant (11) avec le procédé selon la revendication 1, l'ensemble comprenant le composant (11), la cosse de câble (2) au moins au nombre de un, ainsi que, pour chaque cosse de câble (2), une ligne électrique (1) et un élément de réception (4) composé de matériau isolant,
la cosse de câble (2) étant connectée de façon électriquement conductrice à l'extrémité de la ligne électrique (1) et étant insérée dans l'élément de réception (4) et coincée dans celui-ci,
le composant (11) comportant pour chaque cosse de câble (2) respectivement un élément de fixation (7) composé de matériau isolant sur lequel est immobilisée la cosse de câble (2) respective au moyen de l'élément de réception (4) qui est raccordé à l'élément de fixation (7) par un mécanisme d'encliquetage (8, 9),
la cosse de câble (2), l'élément de réception (4) et l'élément de fixation (7) comportant respectivement un alésage (2a, 4a, 7a, 10a) central à travers lequel l'ensemble pour chaque cosse de câble (2) est posé sur respectivement un point de masse (12) en forme de tige dans le véhicule automobile,
l'élément de réception (4) comportant un insert (10) métallique dans lequel se trouve l'alésage (10a) central, et le composant (11) avec l'unité (6), immobilisée sur celui-ci et composée de l'élément de réception (4) et de la cosse de câble (2), étant immobilisé sur le point de masse (12) fixe en forme de tige dans le véhicule automobile de telle sorte que la cosse de câble (2) est raccordée de façon électriquement conductrice au point de masse (12).
